# EUROPÄISCHE PATENTANMELDUNG

(11) **EP 1 239 373 A2**
(43) Veröffentlichungstag der Anmeldung: **11.09.2002**
(21) Anmeldenummer: 02100224.1
(22) Anmeldetag: 06.03.2002
(51) Int. Cl.: G06F 13/42

(54) **Datenübertragung in einem integrierten Schaltkreis**

(30) Priorität: 07.03.2001 DE 10110778
(71) Anmelder: Philips Corporate Intellectual Property GmbH, 52066 Aachen (DE); Koninklijke Philips Electronics N.V., 5621 BA Eindhoven (NL)
(72) Erfinder: Dicks, Andreas, c/o Philips Corp. Intell.Prop.GmbH, 52066 Aachen (DE)
(74) Vertreter: Volmer, Georg, Dipl.-Ing.

(57) **Zusammenfassung**

Bei einem integrierten Schaltkreis mit einem Prozessor (1), einem Datenspeicher (2) und Funktionsblöcken (4,5) ist zur Kommunikation zwischen diesen ein erster Datenbus vorgesehen. Vor einer Datenübertragung großer Datenmengen ist erfindungsgemäß zusätzlich eine Direktverbindung zwischen wenigstens zwei Funktionsblöcken (4,5) mittels eines zweiten Datenbusses (6) vorgesehen. Dabei fungiert ein Funktionsblock (4) als Master und ein Funktionsblock (5) als Slave. Der Slave weist einen linearen Adreasraum auf, auf den der als Master fungierende Funktionsblock (4) mittels eines Handshaking-Verfahrens zugreifen kann. In dem als Slave fungierenden Funktionsblock (5) wird der lineare Adressraum auf einen Puffer-Speicher abgebildet.

## Beschreibung

Die Erfindung betrifft ein sogenanntes eingebettetes System, bei dem es sich um ein System auf einem integrierten Schaltkreis handelt. Ein solches System weist im allgemeinen einen Prozessor, einen Datenspeicher und ggf. mehrere Funktionsblöcke auf. Ferner ist im allgemeinen wenigstens ein Datenbus-System vorgesehen, über den der Prozessor, der Datenspeicher und die Funktionsblöcke miteinander kommunizieren können bzw. über den Daten ausgetauscht werden können.

Für spezielle Einsatzzwecke kann es ggf. wünschenswert sein, dass wenigstens einer der Funktionsblöcke mit einem anderen Funktionsblock große Datenmengen austauscht. In diesem Fall muß bei Systemen nach dem Stand der Technik bei großen externen Datenmengen eine Zwischenspeicherung in dem Speicher stattfinden. In jedem Falle wird infolge des doppelten Datenaustausches über das allgemeine Bus-System des eingebetteten Systems dieses erheblich belastet. Soll beispielsweise von einer Quelle eine große Datenmenge zu einer Senke übertragen werden, so werden die Daten zunächst über den Datenbus über den an dem Bussystem angeschlossenen Speicher in diesem abgelegt. In einem nächsten Schritt werden die Daten aus diesem Speicher zur Senke wiederum über den Datenbus übertragen. Somit wird der Datenbus gleich zweimal belastet.

Es ist Aufgabe der Erfindung, einen integrierten Schaltkreis der eingangs genannten Art anzugeben, bei dem eine große Menge von Daten zwischen wenigstens zwei Funktionsblöcken übertragen werden kann, ohne dass die Datenbusverbindung zwischen Prozessor, Datenspeicher und den übrigen Funktionsblöcken dadurch mehrfach belastet wird.

Diese Aufgabe ist erfindungsgemäß durch folgende Merkmale gelöst:

Integrierter Schaltkreis mit einem Prozessor, einem Datenspeicher und Funktionsblöcken, wobei zur Kommunikation zwischen dem Prozessor, dem Datenspeicher und den Funktionsblöcken ein Datenbus vorgesehen ist, wobei für eine Datenübertragung zwischen wenigstens zwei Funktionsblöcken eine mittels eines Handshaking-Verfahrens auf dem Datenbus stattfindende logische Direktverbindung vorgesehen ist, wobei jeweils ein Funktionsblock als Master und ein Funktionsblock als Slave fungiert, der einen linearen Adressraum aufweist, auf den der als Master fungierende Funktionsblock mittels des Handshaking-Verfahrens zugreifen kann und der in dem als Slave fungierenden Funktionsblock auf einen Puffer-Speicher abgebildet wird.

In diesem eingebetteten System ist erfindungsgemäß eine logische Direktverbindung über den vorhandenen Datenbus vorgesehen, über den die oben erläuterten großen Datenmengen unmittelbar zwischen zwei Funktionsblöcken übertragen werden können, ohne in einem Datenspeicher zwischengespeichert werden zu müssen. Diese Direktverbindung wird mittels eines speziellen, nur für diese Verbindung vorgesehenen Handshaking-Verfahrens realisiert und abgewickelt.

Erfindungsgemäß ist vorgesehen, dass ein Funktionsblock als Master und ein Funktionsblock als Slave fungiert. Der Slave weist einen linearen Adressraum auf, den der Master unmittelbar über den zweiten Datenbus adressieren kann. Mittels eines einfachen vom Datenbus unterstützten Handshaking-Verfahrens kann somit, gesteuert durch den Master, unmittelbar eine Datenübertragung zwischen Master und Slave stattfinden. Dabei schreibt der Master Daten in den linearen Adressraum oder liest Daten aus diesem aus In dem als Slave fungierenden Funktionsblock wird der lineare Adressraum auf einen Puffer abgebildet, aus dem dieser Funktionsblock seinerseits die Daten lesen kann oder in den er sie schreiben kann. Dieser Pufferspeicher ist somit sowohl durch den Master über den linearen Adressraum adressierbar, wie auch durch den zweiten Funktionsblock selbst.

Der Ablauf des Lesens bzw. Schreibens von Daten durch den Master wird über ein einfaches Handshaking-Verfahren gesteuert, das seitens der Funktionsblöcke keinen besonderen Aufwand erfordert.

Gemäß einer Ausgestaltung der Erfindung nach Anspruch 2 handelt es sich bei dem Datenbus um ein Standard-Bussystem, das für On-Chip-Bussysteme standardisiert ist. Bei derartigen Systemen kann es sich beispielsweise um einen PI-Bus oder einen AMBA-Bus handeln. Hierdurch tritt der Vorteil ein, dass die als Master fungierenden Funktionsblöcke, die meist ohnehin zur Verarbeitung derartiger Bus-Protokolle ausgelegt sind, für die Existenz der erfindungsgemäßen Direktverbindung nicht speziell ausgelegt bzw. modifiziert werden müssen. Vielmehr kann die für diese Funktionsblöcke ohnehin vorgesehene Bussystem-Architektur eingesetzt werden. Bei dieser Ausgestaltung der Erfindung entsteht somit für den Datenbus kein wesentlicher, zusätzlicher Aufwand seitens der Funktionsblöcke, die über die Direktverbindung miteinander kommunizieren bzw. über diese Daten austauschen. Das Bus-Protokoll kann ein Standard-Protokoll des jeweils vorgesehenen Bus-Systems sein.

Nach einer weiteren Ausgestaltung der Erfindung gemäß Anspruch 3 handelt es sich beim in dem als Slave fungierenden Funktionsblock vorgesehenen Puffer um einen sogenannten Ping-Pong-Puffer, der auf den Adressraum zyklisch abgebildet wird. Derartige Ping-Pong-Speicher sind wenigstens zweigeteilt, wobei jeweils ein Teil über den Datenbus über den linearen Adressraum adressierbar ist und ein anderer Teil durch den als Slave fungierenden Funktionsblock adressierbar ist. In dieser Konstellation kann der als Master fungierende Funktionsblock in den ersten Teil des Speichers Daten schreiben oder aus diesem lesen, während der als Slave fungierende Funktionsblock aus dem zweiten Teil des Speichers Daten lesen kann oder in diesen schreiben kann. Sind die beiden Speicherbereiche abgearbeitet, wird die Zuordnung der beiden Teile des Ping-Pong-Puffers umgekehrt, so dass nunmehr der als Master fungierende Funktionsblock auf den zweiten Teil des Speichers und der als Slave fungierende Funktionsblock auf den ersten Teil des Speichers zugreifen kann. Damit entsteht der Vorteil, dass beide Funktionsblöcke gleichzeitig auf den Puffer-Speicher zugreifen können, wenn auch auf jeweils andere Teile desselben, was aber keine wesentliche Einschränkung bedeutet.

Weitere Ausgestaltungen der Erfindung gemäß den Ansprüchen 4 und 5 betreffen Ausgestaltungen des Handshaking-Verfahrens, über das der als Master fungierende Funktionsblock und der als Slave fungierende Funktionsblock über die Direktverbindung direkt miteinander kommunizieren. Die vorgesehenen Befehle bzw. Bestätigungs-rückmeldungen werden von dem Bussystem des Datenbusses vorgegeben.

Der erfindungsgemäße Aufbau des integrierten Schaltkreises ist insbesondere für solche Funktionsblöcke vorteilhaft einsetzbar, die große Datenmengen liefern oder empfangen. So kann dieser Schaltkreis vorteilhaft, wie gemäß einer weiteren Ausgestaltung nach Anspruch 6 für einen JPEG-Coder/Encoder (CODEC) vorgesehen sein, der große Datenmengen, nämlich beispielsweise ein codiertes Bild, an einen als Slave fungierenden Funktionsblock, nämlich eine Speicher-Schnittstelle zu einem Massenspeicher liefert. Bei dem als Slave fungierenden Funktionsblock handelt es sich hierbei um eine Speicher-Schnittstelle, die einen Speicher oder Ping-Pong-Puffer aufweist. Die Schnittstelle empfängt über den Ping-Pong-Puffer die Daten von dem JPEG-CODEC und liefert diese Datenmengen ihrerseits an ein externes Speichermedium, bei dem es sich beispielsweise um eine Flash-ROM-Speicher-Karte oder eine Festplatte handeln kann.

Nachfolgend wird ein Ausführungsbeispiel der Erfindung anhand der Zeichnung näher erläutert. Es zeigen:
- Figur 1:: ein Blockschaltbild eines erfindungsgemäßen integrierten Schaltkreises,
- Figur 2:: eine schematische Darstellung des linearen Adressraumes und des Ping-Pong-Puffers in einem als Slave fungierenden Funktionsblock des Systems nach Figur 1,
- Figur 3:: eine schematische Darstellung eines Handshaking-Ablaufs der Direktverbindung zweier Funktionsblöcke des Systems nach Figur 1 und
- Figur 4:: einen Handshaking-Ablauf gemäß Figur 3, bei dem der als Slave fungierende Funktionsblock zunächst nicht zum Datenempfang bereit ist.

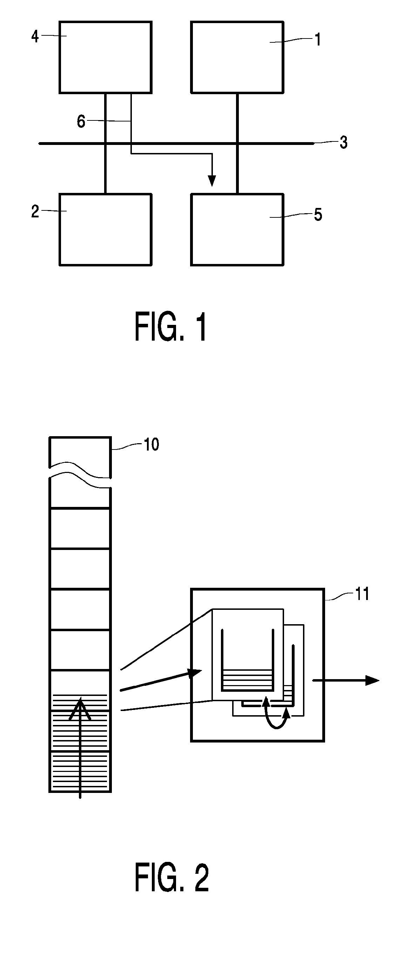

Ein in Figur 1 dargestelltes Blockschaltbild zeigt ein sogenanntes eingebettetes System, also ein auf einem integrierten Schaltkreis realisiertes System, das einem Prozessor 1 und einen Speicher 2 aufweist. Der Speicher 1 kann über einen Datenbus 3 auf den Speicher 2 zugreifen und Daten in diesem schreiben oder aus diesem lesen.

Es sind ferner in der Darstellung gemäß Figur 1 zwei weitere Funktionsblöcke 4 und 5 vorgesehen, die ebenfalls an den Datenbus 3 angeschlossen sind Selbstverständlich können weitere Funktionsblöcke vorgesehen sein.

Der Prozessor 1, der Speicher 2 und die Funktionsblöcke 4 und 5 kommunizieren über den Datenbus 3 bzw. tauschen über diesen Datenbus Daten aus.

Ggf. können einzelne Datenblöcke große Datenmengen schreiben bzw. lesen, was den ersten Datenbus 3 dann relativ stark belasten würde, wenn die Daten in dem Speicher 2 zwischengespeichert werden müssten, da dann ein Schreib- und ein Lesevorgang erforderlich wären.

In dem Ausführungsbeispiel gemäß Figur 1 soll beispielsweise davon ausgegangen werden, dass es sich bei dem Funktionsblock 4 um einen JPEG-CODEC handelt, der Bilder codiert und somit relativ große Datenmengen zur Verfügung stellt. Diese Daten sollen an den zweiten Funktionsblock 5 geliefert werden, bei dem es sich beispielsweise um eine Speicherschnittstelle handelt.

Bei System nach dem Stand der Technik würde dieser Datenaustausch über den Datenbus 3 in der Weise geschehen, dass die Daten zunächst von dem Funktionsblock 4 in den Speicher 2 geschrieben werden. In einem zweiten Schritt würden dann die Daten aus dem Speicher 2 an den Funktionsblock 5 übertragen. Damit würde der Datenbus 3 mit der gesamten Datenmengs zweifach belastet werden.

Um diese exzessive Belastung des Datenbusses 3 zu umgehen, ist erfindungsgemäß eine logische Direktverbindung 6 vorgesehen, die hardwaremäßig über den Datenbus 3 stattfindet. Dieser Direktverbindung 6 verbindet in dem Ausführungsbeispiel gemäß Figur 1 den ersten Funktionsblock 4 und den zweiten Funktionsblock 5 miteinander, wodurch über den Datenbus 3 ein direkter Datenaustausch und zwischen den Funktionsblöcken 4 und 5 unter Umgehung des Speichers 2 ermöglicht wird.

Bei dem Datenbus-System 3 handelt es sich vorzugsweise um ein Standard-Datenbus-System, wie es für Onchip-Systeme vorgesehen und auch standardisiert ist. Dies hat den Vorteil, dass die Funktionsblöcke meist ohnehin auf diese Datenbus-Systeme vorbereitet sind und somit durch die Existenz der Direktverbindung kein zusätzlicher Aufwand in den Funktionsblöcken zu treiben ist, da das für die Direktverbindung verwendete Handshaking-Verfahren sich auf das Datenbus-Protokoll stützt.

Erfindungsgemäß fungiert einer der Funktionsblöcke als Master und einer als Slave. In dem Ausführungsbeispiel fungiert der Funktionsblock 4 als Master und der Funktionsblock 5 als Slave.

In dem einfachen Handshaking-Verfahren, das zwischen den beiden an dem Datenaustausch über den zweiten Datenbus beteiligten Funktionsblöcken stattfindet, steuert der als Master fungierende Funktionsblock 4 die Abläufe.

In dem als Slave fungierenden Funktionsblock 5 ist ein Puffer vorgesehen, der über einen linearen Adressraum über den Datenbus 3 adressierbar ist. Dieser Puffer ist vorzugsweise als Ping-Pong-Puffer ausgelegt, auf den weiter unten noch einzugehen sein wird.

Der als Master fungierende Funktionsblock 4 kann somit über die über den Datenbus 3 stattfindende Direktverbindung 6 unmittelbar über den linearen Adressraum auf den in dem als Slave fungierenden Funktionsblock 5 vorgesehenen Puffer zu greifen. Der Funktionsblock 4 kann auf diese Weise unmittelbar Daten aus diesem Puffer lesen oder in diesen schreiben Selbstverständlich kann auch der als Slave fungierende Funktionsblock 5 unmittelbar Daten aus diesem Puffer lesen oder in diesen schreiben.

Auf diese relativ einfache Weise ist somit ein unmittelbarer Datenaustausch zwischen den Funktionsblöcken 4 und 5 möglich, ohne deren Architektur wesentlich aufwendiger gestalten zu müssen.

Es ist zu betonen, dass die in der Figur 1 angedeutete Direktverbindung 6 eine logische Verbindung darstellt, die hardwaremäßig über den Datenbus 3 realisiert ist.

In Figur 2 findet sich eine schematische Darstellung des linearen Adressraumes und des Puffers in dem als Slave fungierenden zweiten Funktionsblock 5 der Darstellung gemäß Figur 1.

Wie bereits oben erläutert, kann der in dem als Slave fungierenden Funktionsblock 5 vorgesehene Puffer vorteilhaft als Ping-Pong-Puffer ausgebildet sein. Dieser ist in der Figur 2 schematisch als Ping-Pong-Puffer 11 dargestellt.

Ein derartiger Ping-Pong-Puffer weist wenigstens zwei Speicherbereiche auf, die wechselweise extern über den linearen Adressraum 10, der in der Figur 2 schematisch dargestellt ist, oder intern von dem Funktionsblock, in dem der Ping-Pong-Puffer 11 vorgesehen ist, adressiert werden können.

Dies bedeutet für einen realen Ablauf beispielsweise, dass ein erster Speicherbereich des Ping-Pong-Puffers 11 zunächst über den linearen Adressraum 10 durch einen externen Funktionsblock, der als Master fungiert, adressierbar ist. Somit kann dieser Funktionsblock in den ersten Speicherbereich des Ping-Pong-Puffers 11 Daten schreiben oder aus diesem lesen. Gleichzeitig ist der zweite Speicherbereich demjenigen Funktionsblock zugeordnet, in dem sich der Ping-Pong-Puffer 11 befindet und kann von diesem adressiert werden, so dass dieser Funktionsblock in diesem zweiten Speicherbereich Daten schreiben kann oder aus diesem lesen kann.

Sind die Daten in den beiden Speicherbereichen abgearbeitet, so wird die Zuordnung der Speicherbereiche ausgetauscht. Nunmehr kann über den externen linearen Adressraum 10 auf den zweiten Speicherbereich und durch den Funktionsblock, in dem sich der Ping-Pong-Puffer 11 befindet, auf den zweiten Speicherbereich zugegriffen werden. Sind diese Speicherbereiche wiederum abgearbeitet, wird die Zuordnung der Speicherbereiche wiederum ausgetauscht.

Durch diese relativ einfache Technik ist ein gleichzeitiger Zugriff sowohl des externen, als Master fungierenden Funktionsblocks wie auch desjenigen Funktionsblocks, in dem sich der Ping-Pong-Puffer 11 befindet, auf den Ping-Pong-Puffer 11 möglich.

Wie oben bereits erläutert, wird der Datenaustausch des als Master fungierenden Funktionsblocks 4 und des als Slave fungierenden Funktionsblocks 5 gemäß der Darstellung nach Figur 1 mittels der logischen Direktverbindung 6 über ein einfaches Handshaking-Verfahren abgewickelt.

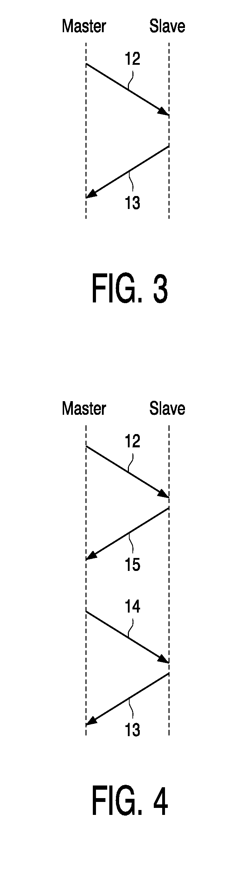

In den Figuren 3 und 4 sind hierzu schematische Darstellungen angedeutet, die eine einfache Abwicklung des Datenaustausches über die über den Datenbus 3 stattfindende Direktverbindung mittels eine Handshaking-Verfahrens in dem System gemäß Figur 1 gestatten.

Die Darstellung gemäß Figur 3 zeigt schematisch einen Master und einen Slave; hierbei handelt es sich beispielsweise um die Funktionsblöcke 4 bzw. 5 der Darstellung gemäß Figur 1.

Gemäß der Darstellung nach Figur 3 sendet der als Master fungierende Funktionsblock zunächst ein Auswahlsignal 12 an den Slave. Ist der Slave empfangsbereit, d.h. will er dem als Master fungierenden Funktionsblock den Zugriff auf den linearen Adress-Bereich gestatten, sendet der Slave bzw. der als Slave fungierende Funktionsblock eine Bestätigungsrückmeldung 13 an den Master bzw. den als Master fungierenden Funktionsblock. Sobald der Master diese Bestätigungsrückmeldung empfängt, weiß er, dass der Slave empfangs- bzw. sendebereit ist und beginnt damit, Daten zu senden bzw. zu empfangen; es beginnt also der Datenaustausch über die Direktverbindung 6 des Systems gemäß Figur 1.

In Figur 4 findet sich eine ähnliche Darstellung wie in Figur 3, jedoch ist hier der Slave nach einem Auswahlsignal 12 durch den Master zunächst nicht sende- bzw. empfangsbereit. Er sendet daher an den Master zunächst eine Abbruch-Neuversuch-Rückmeldung 15. Diese signalisiert dem Master, dass der Slave nicht sende- bzw. empfangsbereit ist und dass der Master einen erneuten Sendeversuch unternehmen muß. Der Master sendet daher später ein erneutes Auswahlsignal 16 an den Slave. Nunmehr ist der Slave sende- bzw. empfangsbereit und sendet eine Bestätigungsrückmeldung 13 an den Master. Nunmehr kann entsprechend dem Ablauf gemäß Figur 3 die Datenübertragung beginnen.

Derartige Handshaking-Mechanismen sind in Standard-Bus-Systemen, wie beispielsweise dem PI-Bus oder dem AMBA-Bus vorgesehen. Da die meisten Funktionsblöcke ohnehin in der Lage sind, derartige Bus-Protokolle abzuarbeiten, entsteht durch die Direktverbindung und das hierfür verwendete Handshaking-Verfahren kein zusätzlicher Aufwand in den Funktionsblöcken. Gleichzeitig wird jedoch der Vorteil erreicht, dass der Datenbus 3 der Darstellung gemäß Figur 1 durch den Datenaustausch nur einfach belastet wind. Dies wiegt besonders schwer, wenn zwischen zwei Funktionsblöcken große Datenmengen ausgetauscht werden müssen, wie dies beispielsweise bei einem JPEG-CODEC der Fall ist.

## Patentansprüche

1. Integrierter Schaltkreis mit einem Prozessor (1), einem Datenspeicher (2) und Funktionsblöcken (4,5), wobei zur Kommunikation zwischen dem Prozessor (1), dem Datenspeicher (2) und den Funktionsblöcken (4,5) ein Datenbus (3) vorgesehen ist, wobei für eine Datenübertragung zwischen wenigstens zwei Funktionsblöcken (4,5) eine mittels eines Handshaking-Verfahrens auf dem Datenbus stattfindende logische Direktverbindung vorgesehen ist, wobei jeweils ein Funktionsblock (4) als Master und ein Funktionsblock (5) als Slave fungiert, der einen linearen Adressraum aufweist, auf den der als Master fungierende Funktionsblock (4) mittels des Handshaking-Verfahrens zugreifen kann und der in dem als Slave fungierenden Funktionsblock (5) auf einen Puffer-Speicher abgebildet wird.

2. Integrierter Schaltkreis nach Anspruch 1,
**dadurch gekennzeichnet,**
**dass** es sich bei dem Datenbus (6), auf dem das Handshaking-Verfahren stattfindet, um ein Standard-Bussystem handelt, das für On-Chip-Bussysteme standardisiert ist.

3. Integrierter Schaltkreis nach Anspruch 1,
**dadurch gekennzeichnet,**
**dass** es sich bei dem Puffer-Speicher um einen Ping-Pong-Puffer (11) handelt, auf den der Adressraum zyklisch abgebildet wird.

4. Integrierter Schaltkreis nach Anspruch 1 oder 2,
**dadurch gekennzeichnet,**
**dass** in dem Handshaking-Verfahren der als Slave fungierende Funktionsblock (5) nach jedem gewährten und abgeschlossenen Zugriff des als Master fungierenden Funktionsblocks auf den linearen Adressbereiche an den als Master fungierenden Funktionsblock (4) eine Bestätigungs-Rückmeldung (13) abgibt.

5. Integrierter Schaltkreis nach Anspruch 1 oder 2,
**dadurch gekennzeichnet,**
**dass** in dem Handshaking-Verfahren der als Slave fungierende Funktionsblock (5) nach jedem zurückgewiesenen Zugriff des als Master fungierenden Funktionsblocks (4) auf den linearen Adressbereiche an den als Master fungierenden Funktionsblock (4) eine Abbruch-Neuversuch-Rückmeldung (15) abgibt.

6. Integrierter Schaltkreis nach Anspruch 1,
**dadurch gekennzeichnet,**
**dass** es sich bei dem als Master fungierenden Funktionsblock (4) um einen JPEG-CODEC und bei dem als Slave fungierenden Funktionsblock (5) um eine Speicher-Schnittstelle handelt, die auf ein extern vorgssehenes Speichermedium zugreift.
